# EUROPÄISCHE PATENTSCHRIFT

(11) **EP 3 331 173 B1**
(45) Veröffentlichungstag und Bekanntmachung des Hinweises auf die Patenterteilung: **30.10.2019**
(21) Anmeldenummer: 16201561.4
(22) Anmeldetag: 30.11.2016
(51) Int. Cl.: H04B 7/14, H04B 7/26, H04B 7/0413, H04B 7/06

(54) **ANORDNUNG ZUM ERWEITERN DER REICHWEITE VON MIMO FUNKSYSTEMEN AUF ABGESCHATTETE BEREICHE**
ASSEMBLY FOR EXPANDING THE RANGE OF MIMO RADIO SYSTEMS TO SHADED AREAS
SYSTÈME D'AUGMENTATION DE PORTÉE DE SYSTÈMES RADIO MIMO SUR SECTEURS MASQUÉS

(43) Veröffentlichungstag der Anmeldung: 06.06.2018
(73) Patentinhaber: Deutsche Telekom AG, 53113 Bonn (DE)
(72) Erfinder: MÜLLER, Jürgen, 64859 Eppertshausen (DE); ARNOLD, Paul, 60389 Frankfurt/Main (DE)
(74) Vertreter: Vossius & Partner Patentanwälte Rechtsanwälte mbB

(56) Entgegenhaltungen:
- EP-A1- 2 802 090
- EP-A2- 1 109 332
- EP-A2- 1 890 510
- DE-A1-102014 204 495
- US-A1- 2005 254 442

## Beschreibung

Die vorliegende Erfindung betrifft eine Anordnung und ein Verfahren zum Erweitern der Reichweite von M-MIMO (Massive Multiple-Input Multiple-Output) Funksystemen auf abgeschattete Bereiche, insbesondere Plätze ohne Sicht zur Mobilfunkstation wie beispielsweise in Gebäuden oder Zügen.

Kunden von Telekommunikationsnetzbetreibern haben steigenden Bedarf an breitbandigen Internetzugängen. Neben der Datenversorgung über drahtgebundene Infrastruktur, z.B. Digital Subscriber Line (DSL), werden immer häufiger Funkzugangstechnologien genutzt. Möglichst flächendeckende Funkversorgung soll mit unterschiedlichen Funknetzen gewährleistet werden. Funknetze werden je nach Anwendungsszenario mit verschiedenen Funktechnologien, z.B. Wireless LAN (WLAN), Universal Mobile Telecommunications System (UMTS), Long Term Evolution (LTE) und zukünftig mit der nächsten Mobilfunkgeneration 5G, in verschiedenen Frequenzbereichen realisiert.

Die Funkversorgung von abgeschatteten Bereichen ist sehr anspruchsvoll. Mobilfunkbasisstationen werden meist außerhalb von Gebäuden aufgebaut, Mobilfunknutzer befinden sich hingegen zum Großteil in abgeschatteten Bereichen, beispielweise auf Plätzen ohne Sicht zur Mobilfunkstation, in Zügen oder in Gebäuden. Orte an welchen sich häufig mehrere Mobilfunknutzer aufhalten bezeichnet man als Hotspots. Dabei verursachen die unterschiedlichsten Materialen zusätzliche Dämpfungen der Funkwellen. Bei Gebäuden spricht man von der sogenannten Penetrationsdämpfung. Die Penetrationsdämpfung ist abhängig vom Baumaterial der Gebäude und von der genutzten Funkfrequenz. Höhere Frequenzen werden stärker gedämpft. Bei zukünftigen Funktechnologien, wie z.B. 5G, ist der Einsatz von immer höheren Frequenzen zu erwarten. Zukünftige Technologien wie Massive-Multiple Input Multiple Output (M-MIMO), mit einer sehr viel höheren Anzahl an Antennenelementen im Vergleich zu heutigen Antennensystemen, werden ebenfalls bei höheren Frequenzen aufgebaut werden. Dies ist durch die bessere Realisierungswahrscheinlichkeit hinsichtlich der Antennengrößen aber auch durch die Verfügbarkeit größerer Frequenzbandbreiten bei hohen Frequenzen begründet. Moderne Gebäude werden vielfach aus Baumaterialien hergestellt, welche hohe Penetrationsdämpfungen aufweisen. Insbesondere Außenwände aus Stahlbeton oder Außenwände mit Metallverkleidungen weisen hohe Hochfrequenzdämpfungen auf. Moderne Fenster sind mit hauchdünnen Metallschichten ausgestattet (Wärmeschutzverglasung). Die Entwicklung führt zu immer besseren Isolierglasscheiben, die Ausstattung mit gut isolierenden Fenstern ist sogar gesetzlich vorgeschrieben. Der Ausstattungsgrad mit metallbeschichteten Isolierglasscheiben ist daher sehr groß. Fenster mit metallischer Schicht verursachen sehr große Penetrationsdämpfungen. Auch an anderen Orten, wie z.B. in Zügen ist mit großer Penetrationsdämpfung zu rechnen, andererseits sind eben genau in solchen Bereichen Hotspots zu erwarten.

Bis jetzt eingeführte Funksysteme können zum Teil die Penetrationsdämpfung von Gebäuden überwinden, da bislang meist Frequenzen kleiner 6 GHz genutzt werden. Jedoch müssen auch bei Frequenzen <6 GHz hohe Aufwände betrieben werden um die Versorgung in Gebäuden sicher zu stellen. Um eine definierte Versorgung innerhalb von Gebäuden zu erzielen, muss die Basisstationsdichte entsprechend erhöht werden. Dies verursacht große Investitionsmaßnahmen der Funknetzbetreiber. Durch den wachsenden Bandbreitenbedarf werden in der nächsten Mobilfunkgeneration 5G Funksysteme in immer höheren Frequenzbereichen Verwendung finden. Dadurch wird die Versorgung von Gebäuden aus ökonomischer Sicht noch anspruchsvoller.

Es ist die Aufgabe der vorliegenden Erfindung, ein Konzept zu schaffen, um abgeschattete Bereiche, d.h. Hotspots in abgeschatteten Bereichen effizient mit Funksignalen zu versorgen.

Diese Aufgabe wird durch die Merkmale der unabhängigen Ansprüche gelöst. Vorteilhafte Weiterbildungsformen sind Gegenstand der abhängigen Ansprüche.

Eine Grundidee der Erfindung liegt darin, eine Anordnung bzw. ein System mit einem passiven Repeater in Kombination mit einem Sendemodul auf der zur Basisstation gewandten Seite des abgeschatteten Bereiches zu verwenden. Das Sendemodul sendet über eine Antenne Pilotsignale in Richtung Massive-MIMO Basisstation aus um diese "anzuregen", damit von der Massive-MIMO Basisstation in Richtung "Indoor-HotSpot" dauerhaft mindestens ein Massive-MIMO Beam ausgeformt werden kann. Der "passive" Repeater kann das Signal in den Innenbereich verlängern. Im Gebäude befindliche Nutzer können von einem Massive-MIMO Beam, welcher durch den Repeater ins Gebäude verlängert wird, profitieren.

Dokument US 2005/0254442 (A1) beschreibt einen aktiven, nicht-frequenz übersetzenden Repeater, der über eine externe Antenne zu einer Basisstation und über eine zweite Antenne zu einem Teilnehmer-Terminal verbunden ist. Der Repeater verstärkt dabei in Uplink-Richtung ein Signal vom Teilnehmer-Terminal, welches über die zweite Antenne empfangen wird und sendet es über die externe Antenna weiter zur Basisstation. In der Downlink-Richtung verstärkt der Repeater die Signale von der Basisstation und leitet diese über die zweite Antenne weiter zum Teilnehmer-Terminal.

Dokument DE 10 2014 204 495 A1 beschreibt einen passiven Repeater zur Weiterleitung von Funksignalen, welcher eine erste Antenne und eine zweite Antenne aufweist, die über eine passivgalvanische Kopplung miteinander verbunden sind. Die erste Antenne ist in einem abgeschatteten Bereich eines Gehäuses angeordnet und die zweite Antenne außerhalb des Gehäuses im Außenraum angeordnet.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, die Reichweite von Kommunikationsnetzwerken mit Massive-MIMO Funksystemen auf abgeschattete Bereiche, d.h. funkabgeschattete Bereiche zu erweitern.

Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Hierbei kann das Mobiltelefon bzw. Smartphone oder der Mobilfunkadapter in einem abgeschatteten Bereich liegen, in dem die Funksignale der Basisstation nur schwach oder gar nicht empfangen werden können.

Massive-MIMO ist eine zukunftsweisende Technologie, welche bei der nächsten Mobilfunkgeneration 5G eine wichtige Rolle einnehmen wird. Massive-MIMO kann durch die räumliche Trennung der Funkkanäle von Mobilfunknutzern, durch das Ausformen von sehr schmalen "Beams", bzw. räumliches ausblenden von Interferenzen, Frequenz- und Zeitressourcen der Funkschnittstelle mehrfach nutzen, dadurch wird das Funkfrequenzspektrum sehr effizient ausgenutzt. Im Idealfall könnte jeder Nutzer innerhalb des Massive-MIMO Systems die gesamte Zellkapazität pro Empfangsantenne nutzen, was eine sehr starke Verbesserung der Effizienz von Mobilfunksystemen bedeutet. Weiterhin kann mit Massive-MIMO, durch räumliche Konzentration der Sendeleistung, sog. Beamforming, die Versorgung innerhalb von abgeschatteten Bereichen verbessert werden. Dies ist möglich, da Massive-MIMO durch das Ausformen von auf die User ausgerichteten "Beams" hohe Antennen-Array Gewinne erzielen kann. Massive-MIMO Beams können sowohl bei Sicht, sogenannter Line of Sight (LOS), als auch ohne Sicht, sog. Non-LOS (NLOS), zwischen der Basisstation und dem Mobilfunkgerät, in Abhängigkeit von der Kanalmatrix des Funkkanales, geformt werden. Die sogenannten "Beams" werden durch Bestimmung und Berücksichtigung der Funkkanalmatrix gebildet werden. Sowohl in LOS als auch in NLOS Umgebungen können hohe Systemgewinne an der Funkschnittstelle erzielt werden. Diese Gewinne werden für Uplink (Senderichtung Nutzer zu Basisstation) und für Downlink (Basisstation - > Nutzer)) erzielt. Die Ausformung der "Beams" wird von der Massive-MIMO Basisstation auf Basis von gesendeten Pilotsequenzen des Mobilfunkgerätes berechnet und vorgenommen. Pilotsignale von in stark abgeschatteten Bereichen befindlichen Mobilfunkendgeräten können im Extremfall, auf Grund hoher Funkfelddämpfung, von einem Massive-MIMO System nicht empfangen werden. Das Massive-MIMO-System hat keine Kenntnis über die Existenz des Nutzers und kann daher auch keinen Beam in Richtung abgeschattetem Nutzer ausformen. Nutzer an Orten mit großer Funkfelddämpfung zur Basisstation können nicht versorgt werden.

Die im Folgenden vorgestellten Geräte, Systeme und Verfahren können Funksignalübertrager nutzen, um von der Basisstation empfangene Funksignale in abgeschattete Bereiche zu übertragen. Für derartige Funksignalübertrager können unterschiedliche Lösungen genutzt werden, um die Funkversorgung in Gebäuden zu verbessern bzw. zu ermöglichen, wie im Folgenden vorgestellt.

Ein Beispiel ist die Installation von kleinen, von Netzbetreiber betriebenen, Funkanlagen in Gebäuden. Solche Anlagen können in Gebäuden installiert werden, in welchen sich viele Mobilfunknutzer befinden und deshalb hoher Bedarf an Mobilfunkversorgung besteht (z.B. Einkaufszentren, Messehallen, Flughäfen, ...). Beispiele hierzu sind Repeater oder Antennenverteilanlagen.

Ferner können in 3GPP Rel. 10 standardisierte Relay Verfahren wie "Amplify and forward" (AFW), "Decode and forward" (DFW) oder regenerative Relays genutzt werden. Diese ermöglichen für Funkssysteme wie LTE (Long Term Evolution) eine Erweiterung der Coverage, d.h. Funkreichweite in abgeschatteten Bereichen. Die Verfahren "Amplify and forward" sowie "Decode and forward" können zusammen mit dem hier vorgestellten Sendemodul Massive-MIMO Systeme dazu anregen "Beams" bzw. Strahlen zu formen und damit die für Massive MIMO typische hocheffiziente räumliche Mehrfachausnutzung von Frequenz- und Zeitressourcen ermöglichen. Alternativ kann das ebenfalls in 3GPP standardisierte Verfahren "Regenerative Relays" im Sendemodul genutzt werden, um einer Massive-MIMO Basisstation Pilotsequenzen zu senden und damit das Ausformen von Massive-MIMO Beams veranlassen. Ein solches regeneratives Relay ist allerdings sehr aufwendig, da es aus einem Sende-/Empfangsmodul und einer Basisstation besteht.

Privat betriebene Repeater können als "Regenerator" dienen, um z.B. außerhalb eines Gebäudes empfangene Signale zu verstärken und im Gebäude regeneriert abzustrahlen. Damit wird der Versorgungsgrad in Gebäuden erhöht. Allerdings werden solche Lösungen auf den Netzbetreibern zugewiesenen Frequenzen betrieben, so dass der Betrieb Privatpersonen nicht gestattet ist.

Passive Repeater bestehen beispielsweise aus einer außerhalb des betreffenden Gebäudes installierten Antenne, einer Koaxialkabelverbindung ins Gebäude und einer Antenne im Gebäude. Für diese Lösung wird eine Kabeldurchführung ins Gebäude notwendig. Bei hohen Frequenzen ist die Kabeldämpfung hoch, die Reichweite ist daher begrenzt. Der Systemgewinn von passiven Repeatern setzt sich aus der Summe der Antennengewinne abzüglich der Dämpfung der Koaxialleitung zwischen den Antennen zusammen.

Ferner können Funksignalübertrager wie folgt realisiert sein: Montage einer Außenantenne und Koaxialkabelverbindung ins Gebäude zum Mobilfunkgerät. Hier sollte das Mobilfunkgerät über einen Antennenanschluss verfügen.

Die im Folgenden vorgestellten Geräte, Systeme und Verfahren können Funksignalübertrager nutzen, welche auf einer VLC (Visual Light Communication) Übertragung basieren. VLC ist eine Drahtlos-Übertragungstechnik bei der sichtbares Licht mit dem Datensignal moduliert wird. Diese Technik wird auch als Light Fidelity (LiFi) bezeichnet. Bei VLC werden Lichtmodulationen von LED-Leuchten eingesetzt, wobei sichtbares Licht mit Wellenlängen zwischen 375 nm und 780 nm genutzt wird. Ein Funksignalübertrager, der auf VLC basiert, umfasst eine Sendeeinrichtung (VLC-Transmitter), beispielsweise eine Leuchtdiode, und eine Empfangseinrichtung (VLC-Empfänger), beispielsweise eine Fotodiode. Für die Datenübertragung werden die Daten im VLC-Transmitter in das entsprechende Protokoll umgesetzt und in Lichtsignale moduliert.

Gemäß einem ersten Aspekt betrifft die Erfindung eine Anordnung zum Erweitern der Reichweite von Massive Multiple-Input Multiple-Output (MIMO) Funksystemen auf abgeschattete Bereiche, mit: einer Außenantenne, die außerhalb eines abgeschatteten Bereichs in Funkreichweite einer Basisstation anordbar ist; einer Innenantenne, die innerhalb des abgeschatteten Bereichs in Funkreichweite zumindest eines drahtlosen Kommunikationsgeräts anordbar ist; einem Sendemodul, das ausgebildet ist, ein Anregungssignal zu erzeugen und über die Außenantenne an die Basisstation abzustrahlen, wobei das Anregungssignal ausgebildet ist, die Basisstation anzuregen, einen Massive-MIMO Strahl in Richtung der Außenantenne auszuformen; und einem Funksignalübertrager, der ausgebildet ist, ein von der Außenantenne empfangenes Funksignal der Basisstation über die Innenantenne an das drahtlose Kommunikationsgerät zu übertragen.

Mit einer solchen Anordnung können stark abgeschattete Bereiche effizient mit Funksignalen versorgt werden. Selbst bei extrem hoher Penetrationsdämpfung, wie Sie in zukünftig verwendenden Frequenzbereichen zu erwarten sind, können abgeschattete Bereiche mit Mobilfunksignalen versorgt werden. Massive MIMO ermöglicht die Mehrfachnutzung gleicher Frequenz- Zeitressourcen durch räumliche Trennung von Funksignalen. Die Anordnung ermöglicht die Versorgung von abgeschatteten Bereichen mit höheren Empfangsfeldstärken, das Nutzsignal zu Interferenzverhältnis sowie das Nutzsignal zu Rauschverhältnis und damit der Datendurchsatz kann erhöht werden.

Damit können Zellrandbereiche wesentlich effizienter und weitreichender mit hohen Datenraten versorgt werden. Durch Platzierung des Repeaters an Positionen an welchen sich üblicherweise keine Mobilfunkkunden befinden, kann der zum Repeater geformte Beam exklusiv durch den Repeater einem abgeschatteten Bereich zur Verfügung gestellt werden und damit die Frequenz- Zeitressourcen zusätzlich von weiteren räumlich getrennten Nutzern bzw. Repeater zugewiesen werden. Damit können an Hotspots, selbst in abgeschatteten Bereichen hohe Datenbandbreiten bereitgestellt werden.

In einer Ausführungsform der Anordnung bildet der Funksignalübertrager zusammen mit der Außenantenne und der Innenantenne einen passiven Repeater, der ausgebildet ist, den von der Außenantenne empfangenen Massive-MIMO Strahl mit dem Funksignal in den abgeschatteten Bereich zu verlängern.

Durch die Kombination von Massive-MIMO, angeregt durch das Sendemodul, und passivem Repeater können kostengünstige bzw. effiziente Repeater genutzt werden.

In einer Ausführungsform der Anordnung ist der Funksignalübertrager als Koaxialkabel ausgebildet, das die Außenantenne mit der Innenantenne verbindet.

Dies bietet den Vorteil, dass die Übertragung wenig störanfällig ist, da das Signal innerhalb des Koaxialkabels übertragen wird, das durch den Schichtenaufbau des Kabels gut vor äußeren Einflüssen geschützt werden kann.

In einer Ausführungsform der Anordnung arbeitet der passive Repeater bidirektional, in einer alternativen Ausführungsform der Anordnung arbeitet der passive Repeater unidirektional.

Die Anordnung eignet sich auch zum Einsatz in zukünftigen Broadcastsystemen mit Massive-MIMO Funktionalität.

In einer Ausführungsform der Anordnung ist das Sendemodul ausgebildet, eine spezifische Codierung an die Basisstation abzustrahlen, wobei die spezifische Codierung der Basisstation eine entsprechende Ressourcenanforderung signalisiert.

Dies bietet den Vorteil, dass die Anordnung eine flexible Ressourcenbereitstellung anfordern kann, so dass bei einem großen abgeschatteten Bereich, beispielsweise einem großen Gebäude mehr Ressourcen bereitgestellt werden können als bei einem kleinen abgeschatteten Bereich, beispielsweise einem kleinen Gebäude oder einem einzelnen Mobilfunknutzer.

In einer Ausführungsform der Anordnung ist der Funksignalübertrager ausgebildet, eine Backhaulverbindung zwischen der Basisstation und dem drahtlosen Kommunikationsgerät aufzubauen.

Mit Backhaul (englisch für Rücktransport) wird die Anbindung eines vorgelagerten, meist hierarchisch untergeordneten Netzknotens an einen zentralen Netzknoten bezeichnet. D.h. das drahtlose Kommunikationsgerät sowie das gesamte Netzwerk innerhalb des abgeschatteten Bereichs, z.B. ein gesamtes Heimnetzwerk kann somit effizient an die Basisstation angebunden werden.

In einer Ausführungsform der Anordnung umfasst der Funksignalübertrager einen optischen Übertrager, der ausgebildet ist, ein optisches Signal zwischen der Außenantenne und der Innenantenne zu übertragen.

Dies bringt den Vorteil, dass mit einem solchen optischen Signal leicht Glasscheiben überwunden werden können, welche für Funksignale, insbesondere bei höherer Frequenz, nur schwer durchdringlich sind.

In einer Ausführungsform der Anordnung umfasst der Funksignalübertrager einen VLC (Visible Light Communication)-Übertrager, der ausgebildet ist, ein VLC-Signal zwischen der Außenantenne und der Innenantenne zu übertragen.

Ein solcher Funksignalübertrager bietet den Vorteil, dass Licht der entsprechenden Wellenlänge als völlig ungefährlich gilt und nahezu überall eingesetzt werden kann. Zudem können die Lichtwellen durch jede optische Abschirmung leicht in der räumlichen Ausbreitung begrenzt werden. Ein weiterer Vorteil ist hierbei ist auch die lizenzfreie Verwendung der entsprechenden Frequenzen.

In einer Ausführungsform der Anordnung umfasst der Funksignalübertrager einen Frequenzumsetzer, der ausgebildet ist, das von der Außenantenne empfangene Funksignal in ein Funksignal einer anderen Frequenz umzusetzen und über die Innenantenne an das drahtlose Kommunikationsgerät zu übertragen.

Dies bietet den Vorteil, dass verschiedene Funkzugangstechnologien, die auf verschiedenen Frequenzen basieren, damit gekoppelt werden können. Beispielsweise kann die Außenantenne ein LTE Funksignal empfangen während die Innenantenne im WiFi Frequenzbereich übertragen kann.

In einer Ausführungsform der Anordnung umfasst der Funksignalübertrager einen Technologieumsetzer, der ausgebildet ist, das von der Außenantenne empfangene Funksignal in ein Funksignal einer anderen Funktechnologie umzusetzen und über die Innenantenne an das drahtlose Kommunikationsgerät zu übertragen.

Dies bietet den Vorteil, dass verschiedene Funktechnologien damit gekoppelt werden können. Beispielsweise kann auf beiden Seiten die gleiche Funktechnologie (z.B. LTE oder WiFi) eingesetzt werden oder in Richtung Basisstation eine andere Funktechnologie (z.B. LTE) als in Richtung HotSpot (z.B. WiFi). Es versteht sich, dass sowohl verschiedene Frequenzen als auch verschiedene Funktechnologien bzw. Kombinationen daraus auf beiden Seiten eingesetzt werden können.

In einer Ausführungsform der Anordnung ist die Außenantenne auf die Basisstation mechanisch und/oder elektrisch ausrichtbar; und/oder die Innenantenne auf das zumindest eine drahtlose Kommunikationsgerät mechanisch und/oder elektrisch ausrichtbar.

Dies bietet den Vorteil, dass höhere Datenraten übertragen werden können, wenn sich beide Antennen oder zumindest eine Antenne exakt ausrichten lassen.

In einer Ausführungsform der Anordnung umfasst der Funksignalübertrager einen MIMO-Übertrager, der ausgebildet ist, das Funksignal in Form von mehreren parallelen räumlich getrennten Datenströmen an das drahtlose Kommunikationsgerät zu übertragen.

Dies bietet den Vorteil, dass mit mehreren parallelen räumlich getrennten Datenströmen höhere Datenraten erzielbar sind.

In einer Ausführungsform der Anordnung ist das Sendemodul ausgebildet, ein Anregungssignal an die Basisstation abzustrahlen, welches einem Massive-MIMO Pilotsignal eines Mobilfunkendgeräts entspricht.

Dies bietet den Vorteil, dass der Basisstation über das Massive-MIMO Pilotsignal alle notwendigen Informationen mitgeteilt werden können, so als würde die Kommunikationsverbindung direkt, d.h. unter Umgehung des Sendemoduls, durch das Mobilfunkendgerät initiiert.

In einer Ausführungsform umfasst die Anordnung ferner ein Empfangsmodul, das ausgebildet ist, ein Synchronisationssignal von der Basisstation zu empfangen, und das Sendemodul ist ausgebildet, das Anregungssignal basierend auf dem Synchronisationssignal netzsynchron an die Basisstation abzustrahlen.

Dies bietet den Vorteil, dass Netzsynchronizität vorliegt und somit insbesondere TDD Systeme implementiert werden können.

Gemäß einem zweiten Aspekt betrifft die Erfindung ein Verfahren zum Erweitern der Reichweite von Massive Multiple-Input Multiple-Output (MIMO) Funksystemen auf abgeschattete Bereiche, mit: Erzeugen und Abstrahlen eines Anregungssignals über eine Außenantenne, die außerhalb eines abgeschatteten Bereichs in Funkreichweite einer Basisstation angeordnet ist, an die Basisstation, um die Basisstation anzuregen, einen Massive-MIMO Strahl in Richtung der Außenantenne auszuformen; und Übertragen eines von der Basisstation über die Außenantenne empfangenen Funksignals über eine Innenantenne an ein drahtloses Kommunikationsgerät innerhalb des abgeschatteten Bereichs, wobei die Innenantenne mit der Außenantenne gekoppelt ist und innerhalb des abgeschatteten Bereichs in Funkreichweite des drahtlosen Kommunikationsgeräts angeordnet ist.

Mit einem solchen Verfahren können stark abgeschattete Bereiche effizient mit Funksignalen versorgt werden. Selbst bei extrem hoher Penetrationsdämpfung, wie Sie in zukünftig verwendenden Frequenzbereichen zu erwarten sind, können abgeschattete Bereiche mit Mobilfunksignalen versorgt werden. Massive MIMO ermöglicht die Mehrfachnutzung gleicher Frequenz- Zeitressourcen durch räumliche Trennung von Funksignalen. Das Verfahren ermöglicht die Versorgung von abgeschatteten Bereichen mit höheren Empfangsfeldstärken, das Nutzsignal zu Interferenzverhältnis sowie das Nutzsignal zu Rauschverhältnis und damit der Datendurchsatz können erhöht werden.

Gemäß einem dritten Aspekt betrifft die Erfindung eine Vorrichtung zum Erweitern der Reichweite von Massive Multiple-Input Multiple-Output (M-MIMO) Funksystemen auf abgeschattete Bereiche, mit: einer Außenantenne, die außerhalb eines abgeschatteten Bereichs in Funkreichweite einer Basisstation anordbar ist; und einem Sendemodul, das ausgebildet ist, ein Anregungssignal zu erzeugen und über die Außenantenne an die Basisstation abzustrahlen, wobei das Anregungssignal ausgebildet ist, die Basisstation anzuregen, einen Massive-MIMO Strahl in Richtung eines mobilen Kommunikationsgeräts innerhalb des abgeschatteten Bereichs auszuformen.

Mit einer solchen Vorrichtung können die gleichen Vorteile erzielt werden wie oben mit der Anordnung oder dem Verfahren. Als weiterer Vorteil kann die Vorrichtung sehr kompakt aufgebaut sein, da sie lediglich aus einer Antenne und einem Sendemodul besteht. So kann z.B. die Antenne als Antennenarray auf einer Leiterplatte ausgeführt sein, auf der gleichzeitig das Sendemodul implementiert sein kann.

In einer Ausführungsform der Vorrichtung ist das Sendemodul ausgebildet, ein Anregungssignal an die Basisstation abzustrahlen, welches einem Massive-MIMO Pilotsignal des mobilen Komunikationsgeräts entspricht.

Dies bietet den Vorteil, dass der Basisstation über das Massive-MIMO Pilotsignal alle notwendigen Informationen mitgeteilt werden können, so als würde die Kommunikationsverbindung direkt, d.h. unter Umgehung des Sendemoduls, durch das Mobilfunkendgerät initiiert.

In einer Ausführungsform umfasst die Vorrichtung ferner ein Empfangsmodul zum Empfangen des Massive-MIMO Pilotsignals von dem mobilen Kommunikationsgerät.

Dies bietet den Vorteil, dass das Sende-/Empfangsmodul flexibel auf im Gebäude vorhandene mobile Endgeräte reagieren kann und automatisch deren Massive-MIMO Pilotsignale empfangen und weiterleiten kann. Damit kann die Basisstation flexibel die notwendigen Ressourcen für die sich über das Sende-/Empfangsmodul im Funksystem anmeldenden mobilen Endgeräte zuweisen.

Weitere Ausführungsbeispiele werden Bezug nehmend auf die beiliegenden Zeichnungen erläutert. Es zeigen:
Fig. 1 eine schematische Darstellung eine MIMO Funksystems 100 mit einer Anordnung zum Erweitern der Reichweite des MIMO Funksystems auf einen abgeschatteten Bereich gemäß einer Ausführungsform;
Fig. 2 eine schematische Darstellung einer Anordnung 200 zum Erweitern der Reichweite des MIMO Funksystems auf einen abgeschatteten Bereich gemäß einer Ausführungsform;
Fig. 3 eine schematische Darstellung eines MIMO Funksystems 300 mit einer Vorrichtung zum Erweitern der Reichweite des MIMO Funksystems auf einen abgeschatteten Bereich gemäß einer Ausführungsform; und
Fig. 4 eine schematische Darstellung eines Verfahrens 400 zum Erweitern der Reichweite eines MIMO Funksystems auf einen abgeschatteten Bereich gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

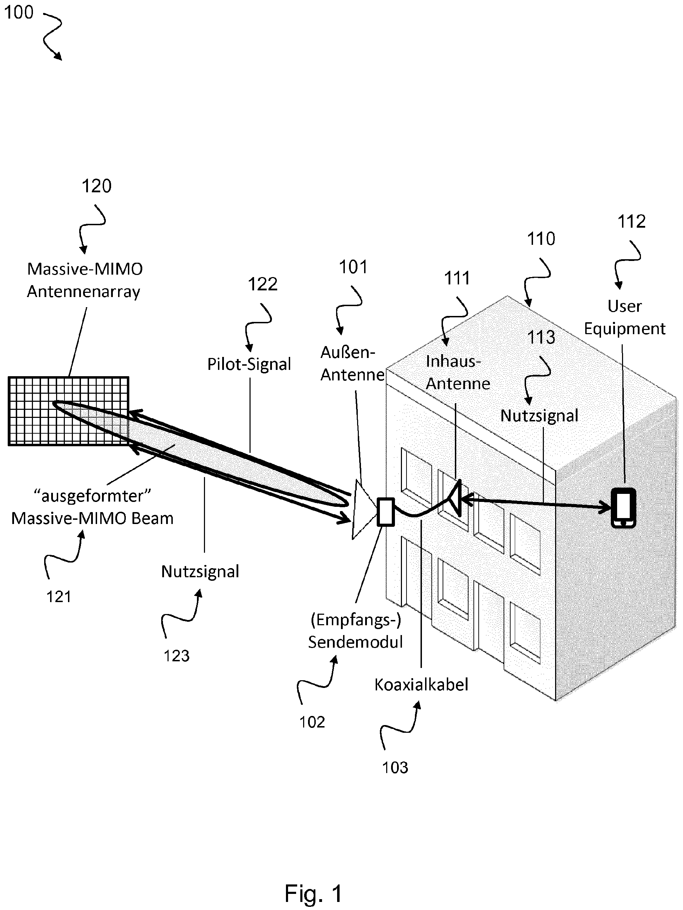

Fig. 1 zeigt eine schematische Darstellung eines MIMO Funksystems 100 mit einer Anordnung zum Erweitern der Reichweite des MIMO Funksystems auf einen abgeschatteten Bereich gemäß einer Ausführungsform. Der abgeschattete Bereich wird hier durch ein Gebäude 110 erzeugt, wobei alle Komponenten innerhalb des Gebäudes 110 innerhalb des abgeschatteten Bereichs liegen und Komponenten außerhalb des Gebäudes, insbesondere an den vorderen Außenseiten des Gebäudes 110 sich außerhalb des abgeschatteten Bereichs befinden.

Die Anordnung umfasst einen kostengünstigen passiven Repeater, wie beispielsweise oben beschrieben, in Kombination mit einem Sendemodul 102 auf der zur Basisstation 120 gewandten Seite des abgeschatteten Bereiches (bzw. des Gebäudes 110). Das Sendemodul 102 sendet über eine (Außen-)Antenne 101 Pilotsignale 122 in Richtung Massive-MIMO Basisstation bzw. Massive-MIMO Antennenarray 120 der Basisstation aus, um diese "anzuregen", damit von der Massive-MIMO Basisstation 120 in Richtung "Indoor-HotSpot" dauerhaft mindestens ein Massive-MIMO Beam 121 ausgeformt werden kann. Der "passive" Repeater kann das Signal 123 in den Innenbereich verlängern. Im Gebäude 110 befindliche Nutzer können von einem Massive-MIMO Beam 121, welcher durch den Repeater ins Gebäude verlängert wird, profitieren.

Die "passiven Repeater" können an Gebäuden 110 (z.B. Einkaufszentrum, Bürogebäuden, ...) oder anderen HotSpots mit abgeschatteter Mobilfunkversorgung, wie z.B. an Zügen oder Plätzen, aufgebaut werden. Das Verfahren kann sowohl in LOS (Line of Sight, Sichtverbindung) als auch in NLOS (Non Line of Sight, keine Sichtverbindung) Umgebungen angewendet werden.

Die zur Basisstation 120 zugewandte Antenne 101 kann als Einzelantenne oder als MIMO-Antenne ausgeführt sein. Eine MIMO-Antenne ermöglicht die Übertragung mehrerer paralleler räumlich getrennter Datenströme zwischen der Basisstation 120 und dem Repeater. Damit können hohe Datenbandbreiten bereitgestellt werden können. In diesem Ausführungsbeispiel unterstützt die Sendemodulkomponente entsprechende MIMO Verfahren.

Der "passive Repeater" besteht aus einer (gerichteten) (Außen-)Antenne 101 und einer (gerichteten) (Innen-) Antenne 111, welche über z.B. ein Koaxialkabel 103 verbunden sind und den Innenbereich bzw. zu versorgenden Bereich über eine Antenne (d.h. über die Innen-Antenne 111) versorgt. Insbesondere die Innenantenne kann auch als "Rundstrahlantenne" ausgeführt sein, d.h. als Antenne, die in einem 360 Grad Bereich oder auch in einem Teilbereich davon sendet und/oder empfängt. Der Repeater kann bidirektional oder unidirektional arbeiten. Mit dem Verfahren bzw. dieser Anordnung können auch mobile Hotspots, wie Busse oder Schienenfahrzeuge (z.B. Züge) angebunden werden.

Wie oben erwähnt, haben passive Repeater den Nachteil, dass der Systemgewinn begrenzt ist, s.o. Die hohen Systemgewinne an der Funkschnittstelle von Massive-MIMO Systemen gleichen die Nachteile von passiven Repeatern jedoch aus.

Das Verfahren bzw. die Anordnung kann weiterhin genutzt werden um kleine Basisstationen (Mikro-, Piko-, oder Femtozellen) an das Mobilfunkkernnetz anzubinden, beispielsweise über Backhaul.

Für die Übertragung des Funksignales 123 zwischen Außenbereich und Innenbereich können verschiedene Verfahren angewendet werden, neben der oben beschriebenen preisgünstigen Lösung mit passivem Repeater können auch optische Verfahren genutzt werden, beispielsweise basierend auf VLC (Visible Light Communication), d.h. über sichtbares Licht, oder auch andere Verfahren, wie sie oben bezüglich Funksignalübertragung beschrieben wurden.

Das Sendemodul 102 sendet ein Pilot-Signal 122 aus, mit Hilfe dessen die Massive-MIMO Basisstation 120 standardkonform die Richtung bzw. die Matrix des Funkkanales des Repeater bestimmt und diese damit in die Lage versetzt, die Ausformung eines "Beams" 121 vorzunehmen.

Das vom Repeater gesendete Pilotsignal 122 kann dabei einem typischen Massive MIMO Pilot eines Mobilfunkendgerätes, beispielsweise des User Equipments 112 entsprechen. Im Time Division Duplex (TDD) System wird das Pilot-Signal 122 netzsynchron abgestrahlt, dazu sollte das Sendemodul in der Lage sein Synchronisationssignale von der Basisstation 120 zu empfangen. Das Sende-/ Empfangsmodul 102 ist in diesem Fall ähnlich einem normalen Mobilfunkendgerät, beispielsweise ähnlich zu dem UE 112, aufgebaut. In Frequency Division Duplex (FDD) Systemen kann die aktive Komponente gegebenenfalls als reines Sendemodul 102 ausgeführt sein, da eine Synchronisation mit dem Mobilfunknetz nicht zwingend erforderlich ist.

Als weitere Ausführung kann ein Repeater eine spezielle Codierung abstrahlen, damit die Basisstation (BS) erkennen kann, dass es sich um einen "Repeater" handelt. Die Codierung "Repeater" kann die Massive-MIMO Basisstation 120 hinsichtlich Ihrer Ressourcenzuweisungsstrategie beeinflussen.

Das Verfahren bzw. die hier beschriebene Anordnung schafft die Voraussetzung, dass stark abgeschattete Bereiche mit Funksignalen versorgt werden können. Unter Berücksichtigung der Funkkanalanalmatrix zwischen Basisstation 120 und Repeater wird ein "Beam" 121 in Richtung Hotspot bereitgestellt. Selbst bei extrem hoher Penetrationsdämpfung, wie sie in zukünftig verwendenden Frequenzbereichen zu erwarten sind, können abgeschattete Bereiche mit Mobilfunksignalen 113 versorgt werden. Massive MIMO ermöglicht die Mehrfachnutzung gleicher Frequenz-Zeitressourcen durch räumliche Trennung von Funksignalen. Durch die Kombination von Massive-MIMO und passivem Repeater wird die Nutzung kostengünstiger Repeater ermöglicht.

Das Verfahren bzw. die hier beschriebene Anordnung ermöglicht die Versorgung von abgeschatteten Bereichen mit höheren Empfangsfeldstärken, es erhöht das Nutzsignal zu Interferenzverhältnis sowie das Nutzsignal zu Rauschverhältnis und damit den Datendurchsatz der Funksysteme. Durch das Verfahren bzw. mit der hier beschriebenen Anordnung können Zellrandbereiche wesentlich effizienter und weitreichender mit hohen Datenraten versorgt werden.

Durch Platzierung des Repeaters an Positionen, an welchen sich üblicherweise keine Mobilfunkkunden befinden, kann der zum Repeater geformte Beam 121 exklusiv durch den Repeater einem abgeschatteten Bereich 110 zur Verfügung gestellt werden und damit die Frequenz-Zeitressourcen zusätzlich von weiteren räumlich getrennten Nutzern bzw. Repeatern zugewiesen werden. Damit können an Hotspots, selbst in abgeschatteten Bereichen hohe Datenbandbreiten bereitgestellt werden.

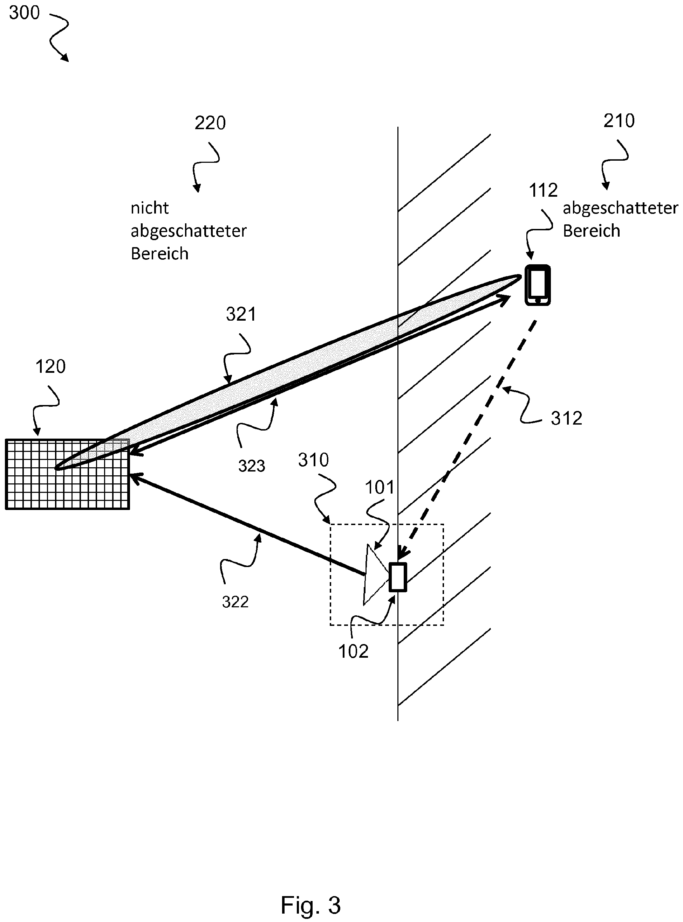

Hierbei ist anzumerken, dass nicht zwingend eine Übertragung des Signales über einen, wie auch immer ausgeführten, Repeater übertragen werden muss. Als weitere Variante kann das Sendemodul 102 die M-MIMO Basisstation 120 anregen, einen Beam auf einen abgeschatteten Bereich auszuformen und damit ausreichend Signalstärke für die Überwindung der Penetrationsdämpfung zur Verfügung stellen. Ein solches Ausführungsbeispiel ist weiter unten bezüglich Figur 3 näher beschrieben.

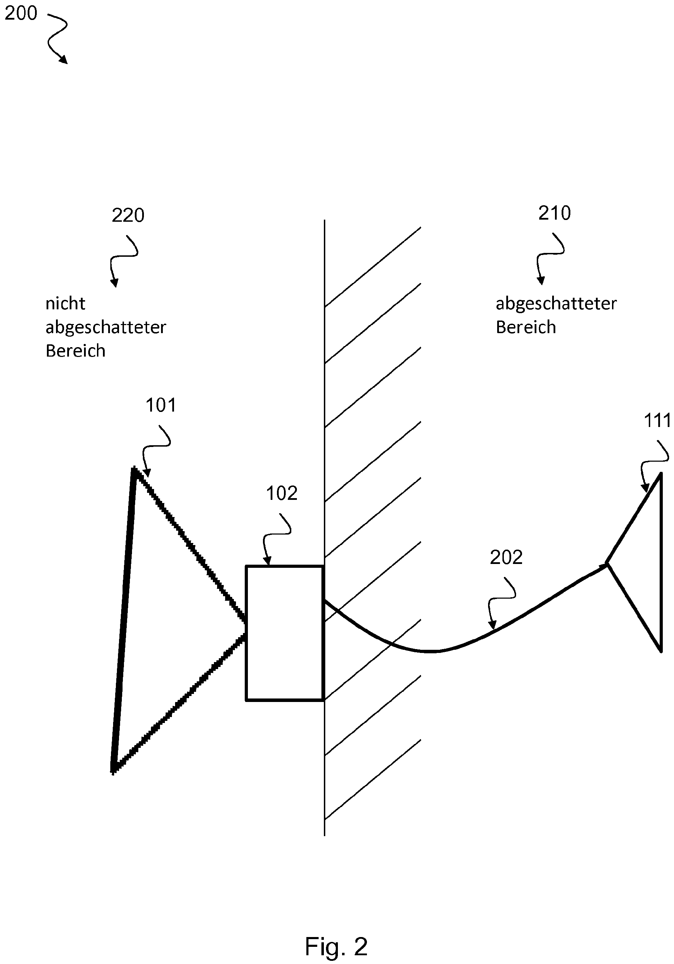

Fig. 2 zeigt eine schematische Darstellung einer Anordnung 200 zum Erweitern der Reichweite von Massive Multiple-Input Multiple-Output (M-MIMO) Funksystemen auf abgeschattete Bereiche 210 gemäß einer Ausführungsform. Der abgeschattete Bereich 210 kann beispielsweise durch das Innere eines Gebäudes, z.B. eines Gebäudes 110 wie in Figur 1 beschrieben, oder eines Fahrzeugs oder durch eine Hinterfront eines Gebäudes gebildet werden. Unter abgeschatteten Bereich ist ein Bereich zu verstehen, in dem eine Funkkommunikation zu einer Basisstation beeinträchtigt ist, d.h. ein Bereich, der außerhalb der Funkreichweite der Basisstation oder in einem Grenzbereich der Funkreichweite, beispielsweise am Zellrand liegt.

Die Anordnung 200 umfasst eine Außenantenne 101, eine Innenantenne 111, ein Sendemodul 102 und einen Funksignalübertrager 202. Die Außenantenne 101 kann der in Figur 1 beschriebenen Außenantenne 101 entsprechen und ist außerhalb eines abgeschatteten Bereichs 210 in Funkreichweite einer Basisstation, beispielsweise der in Figur 1 beschriebenen Basisstation mit Massive MIMO Antennenarray 120 anordbar. Die Innenantenne 111 kann der in Figur 1 beschriebenen Innenantenne 111 entsprechen und ist innerhalb des abgeschatteten Bereichs 210 in Funkreichweite zumindest eines drahtlosen Kommunikationsgeräts, beispielsweise des UE 112 aus Figur 1 anordbar. Die Begriffe "Innen" und "Außen" beziehen sich hierbei auf jeweilige Bereich innerhalb bzw. außerhalb des abgeschatteten Bereichs. Das Sendemodul 102 kann dem in Figur 1 beschriebenen Sendemodul 102 entsprechen und ist dafür ausgelegt, ein Anregungssignal, beispielsweise ein Anregungssignal 122 wie in Figur 1 beschrieben, zu erzeugen und über die Außenantenne 101 an die Basisstation 120 abzustrahlen. Dabei ist das Anregungssignal 122 dafür ausgelegt, die Basisstation 120 anzuregen, einen Massive-MIMO Strahl 121, der auch als Beam bezeichnet wird, in Richtung der Außenantenne 101 auszuformen. Der Funksignalübertrager 202 kann dem in Figur 1 beschriebenen Koaxialkabel 103 entsprechen oder wie oben allgemein bezüglich Funksignalübertragung beschrieben, ausgeführt sein. Der Funksignalübertrager 202 ist dafür ausgelegt, ein von der Außenantenne 101 empfangenes Funksignal der Basisstation 120, beispielsweise ein Nutzsignal 123 gemäß Figur 1, über die Innenantenne 111 an das drahtlose Kommunikationsgerät 112 zu übertragen.

In einer Ausführungsform kann der Funksignalübertrager 202, 103 zusammen mit der Außenantenne 101 und der Innenantenne 111 einen passiven Repeater bilden, beispielsweise einen passiven Repeater wie oben allgemein bezüglich Funksignalübertragung beschrieben, der dafür ausgelegt sein kann, den von der Außenantenne 101 empfangenen Massive-MIMO Strahl 121 mit dem Funksignal 123 in den abgeschatteten Bereich 210 zu verlängern. In einer Ausführungsform kann der passive Repeater bidirektional arbeiten, d.h. sowohl in Richtung Innenantenne 111 zu Außenantenne 101 als auch in Richtung Außenantenne 101 zu Innenantenne 111 können Signale übertragen werden. In einer alternativen Ausführungsform kann der passive Repeater unidirektional arbeiten, d.h. entweder in Richtung Innenantenne 111 zu Außenantenne 101 oder in Richtung Außenantenne 101 zu Innenantenne 111 können Signale übertragen werden.

In einem Ausführungsbeispiel kann der Funksignalübertrager 202 als Koaxialkabel 103 ausgebildet sein, beispielsweise wie zu Figur 1 beschrieben, welches die Außenantenne 101 mit der Innenantenne 111 verbindet.

In einem Ausführungsbeispiel kann das Sendemodul 102 dafür ausgelegt sein, eine spezifische Codierung an die Basisstation 120 abzustrahlen, welche der Basisstation 120 eine entsprechende Ressourcenanforderung signalisiert. Beispielsweise kann diese Codierung signalisieren, dass mehrere Beams 121 von der Basisstation erzeugt und in Richtung Außenantenne 101 gerichtet werden sollen, um eine entsprechende Datenrate zu gewährleisten. Die Codierung kann beispielsweise abhängig von der Anzahl von UEs, die sich im Gebäude bzw. abgeschatteten Bereich 210 befinden und von der Basisstation versorgt werden sollen, erstellt werden.

In einem Ausführungsbeispiel kann der Funksignalübertrager 202 dafür ausgelegt sein, eine Backhaulverbindung zwischen der Basisstation 120 und dem drahtlosen Kommunikationsgerät 112 aufzubauen. Beispielsweise kann dieses drahtlose Kommunikationsgerät eine kleine Funkzelle sein, z.B. eine Mikro-, Pico- oder Femtozelle, welche für die Kommunikation mit anderen Kommunikationsgeräten 112 zuständig ist. Der Backhaulverkehr dieser kleinen Funkzelle kann damit über die Basisstation 120 geführt werden.

In einem Ausführungsbeispiel kann der Funksignalübertrager 202 einen optischen Übertrager umfassen, der dafür ausgelegt ist, ein optisches Signal zwischen der Außenantenne 101 und der Innenantenne 111 zu übertragen, z.B. über ein Glasfaserkabel oder über eine Luftschnittstelle, z.B. über ein optisches Medium wie eine Fensterscheibe.

In einem Ausführungsbeispiel kann der Funksignalübertrager 202 einen VLC (Visible Light Communication)-Übertrager umfassen, der dafür ausgelegt ist, ein VLC-Signal zwischen der Außenantenne 101 und der Innenantenne 111 zu übertragen, wie oben beschrieben.

Der Funksignalübertrager 202 kann einen Frequenzumsetzer und/oder einen Technologieumsetzer umfassen. Der Frequenzumsetzer kann dafür ausgelegt sein, das von der Außenantenne 101 empfangene Funksignal 123 in ein Funksignal 113 einer anderen Frequenz umzusetzen und über die Innenantenne 111 an das drahtlose Kommunikationsgerät 112 zu übertragen. Der Technologieumsetzer kann dafür ausgelegt sein, das von der Außenantenne 101 empfangene Funksignal 123 in ein Funksignal 113 einer anderen Funktechnologie umzusetzen und über die Innenantenne 111 an das drahtlose Kommunikationsgerät 112 zu übertragen. Es versteht sich, dass Kombinationen der beiden oben genannten Umsetzungen möglich sind. Beispielsweise kann das Funksignal 123 von der Außenantenne 101 über ein LTE oder 5G Kommunikationsnetz empfangen werden während das Funksignal 113 von der Innenantenne 111 über ein WLAN-Netz abgestrahlt werden kann.

Sowohl die Außenantenne 101 als auch die Innenantenne 111 können als Richtantennen ausgebildet sein bzw. ausrichtbar sein. Dabei kann die Außenantenne 101 auf die Basisstation 120 ausrichtbar sein und/oder die Innenantenne 111 kann auf das zumindest eine drahtlose Kommunikationsgerät 112 ausrichtbar sein.

In einem Ausführungsbeispiel kann der Funksignalübertrager 202 einen MIMO-Übertrager umfassen, der dafür ausgelegt sein kann, das Funksignal 123 in Form von mehreren parallelen räumlich getrennten Datenströmen an das drahtlose Kommunikationsgerät 112 zu übertragen.

In einem Ausführungsbeispiel kann das Sendemodul 102 dafür ausgelegt sein, ein Anregungssignal 122 an die Basisstation 120 abzustrahlen, welches einem Massive-MIMO Pilotsignal eines Mobilfunkendgeräts 112 entspricht.

In einem Ausführungsbeispiel kann die Anordnung ferner ein Empfangsmodul umfassen bzw. das Sendemodul kann als Sende-/Empfangsmodul ausgeführt sein und ausgelegt sein, ein Synchronisationssignal von der Basisstation 120 zu empfangen. Das Sendemodul 102 kann in dieser Ausführung das Anregungssignal 122 basierend auf dem Synchronisationssignal netzsynchron an die Basisstation 120 abstrahlen.

Fig. 3 zeigt eine schematische Darstellung eines MIMO Funksystems 300 mit einer Vorrichtung 310 zum Erweitern der Reichweite des MIMO Funksystems auf einen abgeschatteten Bereich 210 gemäß einer Ausführungsform.

Die Vorrichtung umfasst eine Außenantenne, beispielsweise eine Außenantenne 101 wie oben zu den Figuren 1 und 2 beschrieben, und ein Sendemodul, beispielsweise ein Sendemodul 102 wie oben zu den Figuren 1 und 2 beschrieben, das jedoch eine erweiterte Funktionalität aufweist, wie im Folgenden beschrieben.

Die Außenantenne 101 ist außerhalb eines abgeschatteten Bereichs 210 in Funkreichweite einer Basisstation 120 anordbar.

Das Sendemodul 102 ist dafür ausgelegt, ein Anregungssignal 322 zu erzeugen und über die Außenantenne 101 an die Basisstation, beispielsweise eine Basisstation mit Massive-MIMO Antennenarray 120 wie oben zu den Figuren 1 und 2 beschrieben, abzustrahlen. Das Anregungssignal 322 ist dafür ausgelegt, die Basisstation 120 anzuregen, einen Massive-MIMO Strahl 321 in Richtung eines mobilen Kommunikationsgeräts 112 innerhalb des abgeschatteten Bereichs 210 auszuformen. D.h. im Gegenstatz zu dem Ausführungsbeispiel aus Figur 1 und 2 richtet die Basisstation 120 den Massive-MIMO Strahl 121 nicht mehr auf die Außenantenne 101 sondern erzeugt einen Strahl 321 in Richtung auf das mobile Kommunikationsgerät 112, das sich innerhalb des abgeschatteten Bereichs 210 befinden kann.

In diesem Scenario wird angenommen, dass das UE 112 keinen Strahl mit ausreichender Reichweite erzeugt, der über den abgeschatteten Bereich 210, beispielsweise das Gebäudeinnere bis zur Basisstation 120 hindurchdringen kann, während die Basisstation 120 andererseits genug Energie zur Verfügung hat, um entsprechend durchdringende Strahlen 321 zu erzeugen. Das UE 112 kann beispielsweise mit dem Sendemodul 102 gekoppelt sein, um dem Sendemodul 102 die Informationen über die Position des UEs 112 zur Verfügung zu stellen, damit die Basistation den Strahl 321 bezüglich der Position des UEs erzeugen kann.

Alternativ kann das UE 112 ein Pilotsignal an das Sendemodul 102 übertragen oder das Sendemodul 102 kann ein von dem UE 112 ausgestrahltes Pilotsignal, das nicht bis zur Basisstation 120 durchdringt, empfangen und es an die Basisstation 120 (verstärkt) weiterleiten. Die Basisstation empfängt dann das Pilotsignal so als würde es direkt von dem UE 112 stammen und erzeugt einen Strahl mit den richtigen Koordinaten basierend auf dem empfangenen Pilotsignal des UE 112.

In einer Ausführungsform kann das Sendemodul 102 dazu ausgelegt sein, ein Anregungssignal 322 an die Basisstation 120 abzustrahlen, welches einem Massive-MIMO Pilotsignal 312 des mobilen Komunikationsgeräts 112 entspricht. Die Vorrichtung 310 kann ferner ein Empfangsmodul umfassen bzw. das Sendemodul 102 kann als Sende-/Empfangsmodul ausgelegt sein, um das Massive-MIMO Pilotsignal 312 von dem mobilen Kommunikationsgerät 112 zu empfangen.

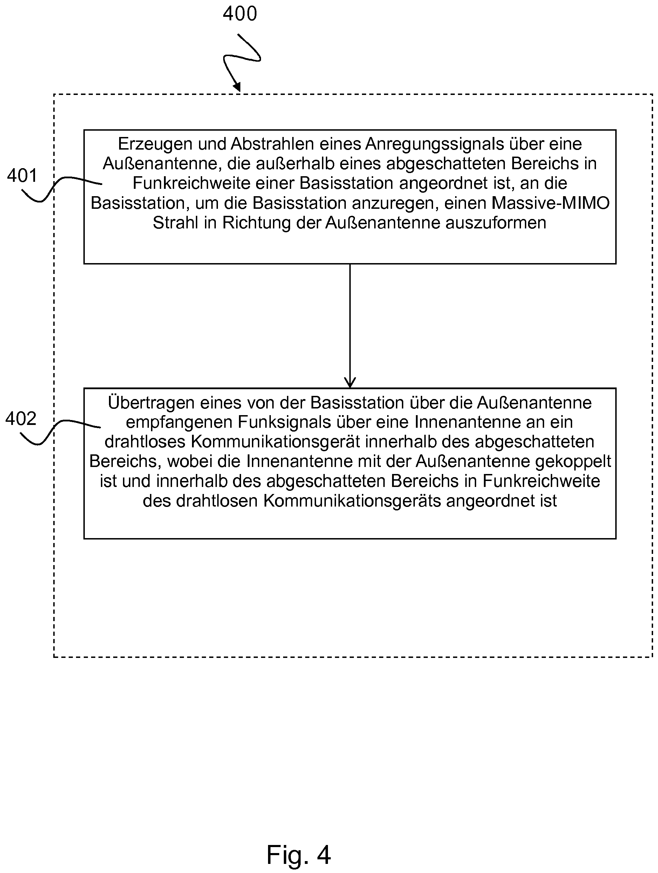

Fig. 4 zeigt eine schematische Darstellung eines Verfahrens 400 zum Erweitern der Reichweite eines MIMO Funksystems auf einen abgeschatteten Bereich gemäß einer Ausführungsform.

Das Verfahren umfasst ein Erzeugen und Abstrahlen 401 eines Anregungssignals über eine Außenantenne, die außerhalb eines abgeschatteten Bereichs in Funkreichweite einer Basisstation angeordnet ist, an die Basisstation, um die Basisstation anzuregen, einen Massive-MIMO Strahl in Richtung der Außenantenne auszuformen, beispielsweise wie oben zu den Figuren 1 und 2 beschrieben.

Das Verfahren umfasst ferner das Übertragen 402 eines von der Basisstation über die Außenantenne empfangenen Funksignals über eine Innenantenne an ein drahtloses Kommunikationsgerät innerhalb des abgeschatteten Bereichs, wobei die Innenantenne mit der Außenantenne gekoppelt ist und innerhalb des abgeschatteten Bereichs in Funkreichweite des drahtlosen Kommunikationsgeräts angeordnet ist, beispielsweise wie oben zu den Figuren 1 und 2 beschrieben.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Figur 4 beschriebene Verfahren 400 ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Kommunikationsnetzwerk, beispielsweise in einem Kommunikationsnetzwerk in dem in Figur 1 beschriebenen Gebäude 110 angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen. Die Erfindung wird durch die unabhängigen Ansprüche 1 und 9 definiert. Bevorzugte Ausgestaltungen der Erfindung sind in den Unteransprüchen angegeben. Während in dieser Beschreibung mehrere Ausführungsformen und/oder Beispiele offenbart wurden, ist der Gegenstand, für den Schutz begehrt wird, streng und ausschließlich auf jene Ausführungsformen und/oder Beispiele beschränkt, die vom Umfang der beigefügten Ansprüche umfasst sind. In der Beschreibung erwähnte Ausführungsformen und/oder Beispiele, die nicht in den Umfang der Ansprüche fallen, sind zum Verständnis der Erfindung nützlich.

## Patentansprüche

1. Anordnung (200) zum Erweitern der Reichweite von Massive Multiple-Input Multiple-Output (MIMO) Funksystemen auf abgeschattete Bereiche (210), mit:
einer Außenantenne (101), die außerhalb eines abgeschatteten Bereichs (210) in Funkreichweite einer Basisstation (120) angeordnet ist;
einer Innenantenne (111), die innerhalb des abgeschatteten Bereichs (210) in Funkreichweite zumindest eines drahtlosen Kommunikationsgeräts (112) angeordnet ist;
einem Sendemodul (102), das ausgebildet ist, ein Anregungssignal (122) zu erzeugen und über die Außenantenne (101) an die Basisstation (120) abzustrahlen, wobei das Anregungssignal (122) ausgebildet ist, die Basisstation (120) anzuregen, einen Massive-MIMO Strahl (121) in Richtung der Außenantenne (101) auszuformen; und
einem Funksignalübertrager (202, 103), der ausgebildet ist, ein von der Außenantenne (101) empfangenes Funksignal (123) der Basisstation (120) über die Innenantenne (111) an das drahtlose Kommunikationsgerät (112) zu übertragen,
wobei der Funksignalübertrager (202, 103) zusammen mit der Außenantenne (101) und der Innenantenne (111) einen passiven Repeater bildet, der ausgebildet ist, den von der Außenantenne (101) empfangenen Massive-MIMO Strahl (121) mit dem Funksignal (123) in den abgeschatteten Bereich (210) zu verlängern.

2. Anordnung (200) nach Anspruch 1,
wobei der Funksignalübertrager (202, 103) als Koaxialkabel (103) ausgebildet ist, das die Außenantenne (101) mit der Innenantenne (111) verbindet.

3. Anordnung (200) nach einem der vorstehenden Ansprüche,
wobei das Sendemodul (102) ausgebildet ist, eine spezifische Codierung an die Basisstation (120) abzustrahlen, wobei die spezifische Codierung der Basisstation (120) eine entsprechende Ressourcenanforderung signalisiert.

4. Anordnung (200) nach einem der vorstehenden Ansprüche,
wobei der Funksignalübertrager (202, 103) ausgebildet ist, eine Backhaulverbindung zwischen der Basisstation (120) und dem drahtlosen Kommunikationsgerät (112) aufzubauen.

5. Anordnung (200) nach einem der vorstehenden Ansprüche,
wobei die Außenantenne (101) auf die Basisstation (120) mechanisch und/oder elektrisch ausrichtbar ist; und/oder
wobei die Innenantenne (111) auf das zumindest eine drahtlose Kommunikationsgerät (112) mechanisch und/oder elektrisch ausrichtbar ist.

6. Anordnung (200) nach einem der vorstehenden Ansprüche,
wobei der Funksignalübertrager (202, 103) einen MIMO-Übertrager umfasst, der ausgebildet ist, das Funksignal (123) in Form von mehreren parallelen räumlich getrennten Datenströmen an das drahtlose Kommunikationsgerät (112) zu übertragen.

7. Anordnung (200) nach einem der vorstehenden Ansprüche,
wobei das Sendemodul (102) ausgebildet ist, ein Anregungssignal (122) an die Basisstation (120) abzustrahlen, welches einem Massive-MIMO Pilotsignal eines Mobilfunkendgeräts (112) entspricht.

8. Anordnung (200) nach einem der vorstehenden Ansprüche, ferner mit:
einem Empfangsmodul (102), das ausgebildet ist, ein Synchronisationssignal von der Basisstation (120) zu empfangen,
wobei das Sendemodul (102) ausgebildet ist, das Anregungssignal (122) basierend auf dem Synchronisationssignal netzsynchron an die Basisstation (120) abzustrahlen.

9. Verfahren (400) zum Erweitern der Reichweite von Massive Multiple-Input Multiple-Output (MIMO) Funksystemen auf abgeschattete Bereiche, mit:
Erzeugen und Abstrahlen (401) eines Anregungssignals über eine Außenantenne, die außerhalb eines abgeschatteten Bereichs in Funkreichweite einer Basisstation angeordnet ist, an die Basisstation, um die Basisstation anzuregen, einen Massive-MIMO Strahl in Richtung der Außenantenne auszuformen; und
Übertragen (402), durch einen Funksignalübertrager (202, 103), eines von der Basisstation über die Außenantenne empfangenen Funksignals über eine Innenantenne an ein drahtloses Kommunikationsgerät innerhalb des abgeschatteten Bereichs, wobei die Innenantenne mit der Außenantenne gekoppelt ist und innerhalb des abgeschatteten Bereichs in Funkreichweite des drahtlosen Kommunikationsgeräts angeordnet ist,
wobei der Funksignalübertrager zusammen mit der Außenantenne und der Innenantenne einen passiven Repeater bildet, der ausgebildet ist, den von der Außenantenne empfangenen Massive-MIMO Strahl mit dem Funksignal in den abgeschatteten Bereich zu verlängern.

## Claims

1. An assembly (200) for expanding the range of Massive Multiple-Input Multiple-Output, MIMO, radio systems to shaded areas (210), comprising:
an outer antenna (101) which is arranged outside a shaded area (210) within the radio range of a base station (120);
an inner antenna (111) which is arranged within the shaded area (210) within the radio range of at least one wireless communication device (112);
a transmission module (102) which is configured to generate an excitation signal (122) and radiate it via the outer antenna (101) to the base station (120), wherein the excitation signal (122) is configured to excite the base station (120) to form a Massive MIMO beam (121) in the direction of the outer antenna (101); and
a radio signal transmitter (202, 103) which is configured to transmit a radio signal (123) of the base station (120) received by the outer antenna (101) via the inner antenna (111) to the wireless communication device (112),
wherein the radio signal transmitter (202, 103) together with the outer antenna (101) and the inner antenna (111) forms a passive repeater which is configured to expand the Massive MIMO beam (121) received by the outer antenna (101) together with the radio signal (123) into the shaded area (210).

2. The assembly (200) according to claim 1,
wherein the radio signal transmitter (202, 103) is configured as a coaxial cable (103) which connects the outer antenna (101) to the inner antenna (111).

3. The assembly (200) according to any one of the preceding claims,
wherein the transmission module (102) is configured to radiate a specific coding to the base station (120), wherein the specific coding signals a corresponding source demand to the base station (120).

4. The assembly (200) according to any one of the preceding claims,
wherein the radio signal transmitter (202, 103) is configured to establish a backhaul connection between the base station (120) and the wireless communication device (112).

5. The assembly (200) according to any one of the preceding claims,
wherein the outer antenna (101) is mechanically and/or electrically alignable with the base station (120); and/or
wherein the inner antenna (111) is mechanically and/or electrically alignable with the at least one wireless communication device (112).

6. The assembly (200) according to any one of the preceding claims,
wherein the radio signal transmitter (202, 103) comprises a MIMO transmitter which is configured to transmit the radio signal (123) in the form of a plurality of parallel spatially separate data streams to the wireless communication device (112).

7. The assembly (200) according to any one of the preceding claims,
wherein the transmission module (102) is configured to radiate an excitation signal (122) which corresponds to a Massive MIMO pilot signal of a mobile communication terminal (112) to the base station (120).

8. The assembly (200) according to any one of the preceding claims, further comprising:
a receiving module (102) which is configured to receive a synchronization signal from the base station (120),
wherein the transmission module (102) is configured to radiate the excitation signal (122) based on the synchronization signal in a network-synchronous manner to the base station (120).

9. A method (400) for expanding the range of Massive Multiple-Input Multiple-Output, MIMO, radio systems to shaded areas, comprising:
generating and radiating (401) an excitation signal via an outer antenna being arranged outside a shaded area within the radio range of a base station to the base station in order to excite the base station to form a Massive MIMO beam in the direction of the outer antenna; and
transmitting (402), by a radio signal transmitter (202, 103), a radio signal received by the base station via the outer antenna to a wireless communication device within the shaded area via an inner antenna, wherein the inner antenna is coupled to the outer antenna and arranged within the shaded area within the radio range of the wireless communication device,
wherein the radio signal transmitter together with the outer antenna and the inner antenna forms a passive repeater which is configured to expand the Massive MIMO beam received by the outer antenna with the radio signal into the shaded area.

## Revendications

1. Dispositif (200) d'extension à des zones ombrées de la portée de systèmes de communication à entrées et sorties multiples MIMO massif (210), comprenant :
une antenne externe (101), située à l'extérieur d'une zone ombrée (210) à portée radio d'une station de base (120) ;
une antenne interne (111), située à l'intérieur de la zone ombrée (210) à portée radio d'au moins un appareil de communication sans fil (112) ;
un module émetteur (102), prévu pour générer un signal d'excitation (122) et diffuser vers la station de base (120) via l'antenne externe (101), le signal d'excitation (122) étant prévu pour exciter la station de base (120) à former un faisceau MIMO massif (121) vers l'antenne externe (101) ; et
un transmetteur de signaux radio (202, 103), prévu pour transmettre à l'appareil de communication sans fil (112) via l'antenne interne (111) un signal radio (123) de la station de base (120) reçu de l'antenne externe (101), le transmetteur de signaux radio (202, 103) formant un répéteur passif avec l'antenne externe (101) et l'antenne interne (111), prévu pour prolonger dans la zone ombrée (210) le faisceau MIMO massif (121) reçu de l'antenne externe (101) avec le signal radio (123).

2. Dispositif (200) selon la revendication 1,
où le transmetteur de signaux radio (202, 103) est réalisé comme câble coaxial (103) reliant l'antenne externe (101) à l'antenne interne (111).

3. Dispositif (200) selon l'une des revendications précédentes,
où le module émetteur (102) est prévu pour diffuser un codage spécifique vers la station de base (120), ledit codage spécifique signalant une requête de ressource correspondante à la station de base (120).

4. Dispositif (200) selon l'une des revendications précédentes,
où le transmetteur de signaux radio (202, 103) est prévu pour établir une connexion de liaison terrestre entre la station de base (120) et l'appareil de communication sans fil (112).

5. Dispositif (200) selon l'une des revendications précédentes,
où l'antenne externe (101) est orientable mécaniquement et/ou électriquement vers la station de base (120) ; et/ou
où l'antenne interne (111) est orientable mécaniquement et/ou électriquement vers ledit au moins un appareil de communication sans fil (112).

6. Dispositif (200) selon l'une des revendications précédentes,
où le transmetteur de signaux radio (202, 103) comprend un transmetteur MIMO, prévu pour transmettre le signal radio (123) à l'appareil de communication sans fil (112) sous la forme de plusieurs flux de données parallèles spatialement séparés.

7. Dispositif (200) selon l'une des revendications précédentes,
où le module émetteur (102) est prévu pour diffuser vers la station de base (120) un signal d'excitation (122) qui correspond à un signal pilote MIMO massif d'un terminal mobile (112).

8. Dispositif (200) selon l'une des revendications précédentes, comprenant en outre :
un module récepteur (102), prévu pour recevoir un signal de synchronisation de la station de base (120),
le module émetteur (102) étant prévu pour diffuser en synchronie réseau le signal d'excitation (122) vers la station de base (120) sur la base du signal de synchronisation.

9. Procédé (400) d'extension à des zones ombrées de la portée de systèmes de communication à entrées et sorties multiples MIMO massif, comprenant :
la génération et la diffusion (401) vers une station de base d'un signal d'excitation via une antenne externe, située à l'extérieur d'une zone ombrée à portée radio de ladite station de base, pour exciter la station de base à former un faisceau MIMO massif vers l'antenne externe ; et
la transmission (402) via une antenne interne, par un transmetteur de signaux radio (202, 103), d'un signal radio de la station de base reçu via l'antenne externe, à un appareil de communication à l'intérieur de la zone ombrée, l'antenne interne étant couplée à l'antenne externe et située à l'intérieur de la zone ombrée à portée radio de l'appareil de communication sans fil,
le transmetteur de signaux radio formant un répéteur passif avec l'antenne externe et l'antenne interne, prévu pour prolonger dans la zone ombrée le faisceau MIMO massif reçu de l'antenne externe avec le signal radio.
